# EUROPEAN PATENT SPECIFICATION

(11) **EP 3 624 415 B1**
(45) Date of publication and mention of the grant of the patent: **08.09.2021**
(21) Application number: 19184783.9
(22) Date of filing: 05.07.2019
(51) Int. Cl.: H04L 29/06, H04L 9/32

(54) **A DECENTRALIZED ASSET CUSTODY AND CLEARING PLATFORM SYSTEM**
DEZENTRALISIERTES VERMÖGENSBEWAHRUNGS- UND -VERRECHNUNGSPLATTFORMSYSTEM
CONSERVATION DÉCENTRALISÉE D'ACTIFS ET SYSTÈME DE PLATEFORME DE COMPENSATION

(30) Priority: 11.09.2018 CN 201811055383
(43) Date of publication of application: 18.03.2020
(73) Proprietor: Blue Helix, Beijing (CN)
(72) Inventor: JU, Jianhua, Chaoyang District, Beijing Xiaguangli 18 (CN); TANG, Fulin, Chaoyang District, Beijing Xiaguangli 18 (CN); LIN, Yuqi, Chaoyang District, Beijing Xiaguangli 18 (CN); WANG, Boli, Chaoyang District, Beijing Xiaguangli 18 (CN)
(74) Representative: MacDougall, Alan John Shaw

(56) References cited:
- CN-A- 106 228 446
- US-A1- 2016 224 949
- US-A1- 2018 089 041

## Description

### TECHNOLOGY FIELD

This invention involves blockchain field; particularly it involves the construction of a decentralized asset custody and clearing platform and trading platform. It proposes an efficient and secure solution for constructing a decentralized asset custody and clearing platform.

### BACKGROUND TECHNOLOGY

Blockchain is a chained data structure that is connecting data blocks in chronological order, and it is a distributed ledger that is immutable and unforgeable guaranteed by cryptography, where the ledger records digital asset derived from cryptography. All in all, blockchain technology is a whole new distributed infrastructure and compute mode that utilizes chained-block data structure to authenticate and store data, that utilizes distributed nodes consensus algorithm to generate and update data, that utilizes cryptography to protect data transmission and access, that utilizes smart contracts which are formed by automated scripts to program and process data.

Centralized exchange is a centralized platform or application, which allows users to trade fiat currencies or cryptocurrencies with cryptocurrencies. Users directly deposit cryptocurrencies into exchange, which helps store capital as a wallet until orders generated. Centralized exchanges are with high efficiency and good user experiences, while they suffer from crucial defects such as low security.

Decentralized exchange is differentiated from centralized exchange that assets of decentralized exchange users are not controlled by a single institution or platform. In the whole life cycle of a transaction, user assets are under full control by users themselves or decentralized communities or organizations. Decentralized exchanges are robust to security attacks, while they suffer from bad user experiences and low trading efficiencies.

More specifically, a decentralized exchange uses blockchain technology which, in order to be suitably secure, requires the use of a large, distributed network of nodes. A trading event starts with a first 'block' being broadcast to all nodes in the network. This block contains a digital signature, timestamp and relevant information relating to the trading event. In order to 'verify' the block, a so-called mining process is undertaken within the distributed network, wherein the first block is tested by a number of available nodes according to the specific rules/incentives associated with the exchange and, if enough (i.e. a majority of) nodes agree that the block carries a valid transaction, they add a new block to the chain, which is again timestamped. The chain is then tested by a number of (different) available nodes and, once again, if enough (i.e. a majority of) nodes agree that the block carries a valid transaction, they add a new block to the chain. This process may be repeated many times, depending (amongst other thing) on the degree of security required, wherein, in theory, the more iterations of the verification (i.e. the longer the blockchain), the greater will be the robustness of the exchange to security attacks.CN106228446 describes an asset transaction platform based on a private block chain, and the system comprises a plurality of ripple nodes and a gateway. The ripple nodes are used for carrying out the transaction, regularly generating distributed ledgers, transmitting the distributed ledgers to other ripple nodes, carrying out the voting of the transaction information in the received ledgers, enabling the ledgers meeting a preset voting condition to be packaged as the consensus result information. Distributed storage of a transaction voucher and related key information is achieved through storing the extension information in the ledgers and enabling the consensus result information to be stored in each ripple node to form the block chain.

However, a significant drawback associates with the use of a mining process to verify and complete a transaction is that it takes a long time, often several days which, in turn, leads to the above-mentioned bad user experiences and low trading efficiencies.

### INVENTION CONTENTS

In order to tackle the issues of bad user experiences and low trading efficiencies, this invention is targeted to provide a construction method for a decentralized asset custody and clearing platform which maintains the user experience and trading efficiency to that of a centralized exchange, while keeps the high security and attack-robust features of a decentralized exchange. In accordance with a first aspect of the present invention there is provided a computer-implemented decentralized digital asset storage and transfer system, comprising a first access gateway communicably coupled to a platform comprising at least three dedicated and computationally independent computing nodes, wherein said platform is configured to, upon receipt of a digital asset storage or transfer instruction via said first access gateway, perform a method comprising:
- defining a said node as an originating node and others of said nodes as verifying nodes;
- performing, by said originating node, a verification process in respect of said instruction to determine a verification result, and broadcasting said verification result to said verifying nodes;
- performing, by each said verifying node independently, a verification process in respect of said instruction to determine a verification result, and comparing said verification result with the verification result received from the originating node;
- determining a consensus between verification results determined by said nodes;
- in the event of a consensus, each node processing said instruction, independently of said other nodes; and
- in the event of no consensus, penalizing said originating node according to a preset penalty policy and selecting an alternative one of said nodes as an originating node, and repeating the said method with the other nodes as verifying nodes.

Thus, by providing at least three dedicated and computationally independent computing nodes, communicably coupled to the first access gateway, a verification process similar to that described above in relation to each step or phase of a blockchain process can be realized, except that the required number of available nodes is always available to perform the verification process substantially simultaneously and the 'voting' result can be returned very quickly. Thus, the speed and efficiency of a centralized digital asset storage and transfer system can be retained, whilst the robustness of a decentralized system can be provided.

In one exemplary embodiment of the present invention, the method may further comprise packing result data from said processing by each node into respective block data, and adding said block data to a local blockchain network hosted by said platform.

Optionally, said originating node may be defined according to a mining validation strategy. In an exemplary embodiment, said originating node may be configured to perform said verification process in respect of said instruction to obtain a first clearing result, sign said first clearing result with its private key, and may broadcast the signed first clearing result to said verifying nodes.

In an exemplary embodiment of the invention, the verifying nodes may be configured to, upon receipt of said signed first clearing result, perform said verification process in respect of said instruction to obtain a local clearing result, and may compare said local clearing result with said first clearing result to determine a verification result.

Optionally, each said verifying node may be configured to sign the respective verification result with its own private key and may broadcast the signed verification result to the other nodes.

According to an exemplary embodiment of the invention, each node may be configured to, upon receipt of signed verification results from the other nodes, calculate, using said verification results, a final verification result.

Optionally, each node may be configured to perform a verification process in respect of said first clearing result in relation to a respective final verification result and, if said clearing result is verified, may pack said first clearing result and verification data into block data and add said block data to a local blockchain network hosted by said platform.

In an exemplary embodiment of the invention, a consensus may be determined between the verification results of processing by said nodes when the verification results of a majority of said nodes correspond.

Optionally, asset control rights may be stored in a distributed manner among said nodes, each node storing a fragment of a respective asset control right.

In an exemplary embodiment of the invention, the system may further comprise a second access gateway configured to be coupled to an external blockchain network.

This aspect can further improve the robustness of the system against security attacks, but the mining process subsequently performed by the external blockchain network to validate a transaction can be significantly shortened (i.e. less blocks), relative to known decentralizes asset storage and trading systems, thereby improving trading efficiency.

Optionally, the system may further comprise a second access gateway configured to be coupled to an external blockchain network, and wherein, when said instruction comprises a digital asset transfer, said second access gateway may be configured to, in the event that a consensus is determined between the verification results of said nodes, package respective asset control right fragments into a transfer instruction compatible with a specified external blockchain network, and transmit said transfer instruction to said external blockchain network.

In accordance with a second aspect of the present invention there is provided a computer-implemented method of performing decentralized digital asset storage and transfer, comprising providing a first access gateway communicably coupled to a platform comprising at least three dedicated and computationally independent computing nodes, the method comprising:
- receiving a digital asset storage or transfer instruction via said first access gateway;
- defining a said node as an originating node and others of said nodes as verifying nodes;
- performing, by said originating node, a verification process in respect of said instruction to determine a verification result, and broadcasting said verification result to said verifying nodes;
- performing, by each said verifying node independently, a verification process in respect of said instruction to determine a verification result, and comparing said verification result with the verification result received from the originating node;
- determining a consensus between verification results determined by said nodes;
- in the event of a consensus, processing said instruction by each node independently of said other nodes;
- in the event of no consensus, penalizing said originating node according to a preset penalty policy and selecting an alternative one of said nodes as an originating node, and repeating the said method with the other nodes as verifying nodes.

As such, solutions of the present invention provide an efficient and secure decentralized asset custody and clearing platform system. The platform receives trading and custody instructions through the access gateway. Each of the nodes operates transactions clearing and assets custody independently. The result of each node's clearing and custody operations is broadcast to other nodes. After the nodes reach consensus on the results, they complete the decentralized asset clearing and custody instructions together.

When the decentralized asset custody and clearing platform performs transaction clearing, the nodes collectively perform clearing on the transaction, which specifically includes the following steps:
Step 1: According to a certain strategy, the originating node of the transaction clearing is selected from the N nodes, and the other N-1 nodes are the verifying nodes of the transaction clearing. The selection strategy of the originating node includes but is not limited to the following: POW (proof of work), POS (proof of stake), DPOS (delegated proof of work), and simple polling alternation.
Step2: The originating node performs clearing of M (M>=1) transaction instructions in unit time t, and obtains a clearing result R. R can be expressed formally as: R = ϕ(t, M), where ϕ denotes the agreed clearing method. The originating node signs the clearing result R using the private key si representing its own identity, obtains the Rsi, and then broadcasts it to the other N-1 verifying nodes.
Step 3:After receiving the clearing result Rsi broadcasted by the initiating node, any verification node performs the clearing of the M transaction instructions again to obtain the local clearing result r. The verification node compares r with R to obtain the verification result f of this time. f can be expressed formally as: f = λ(r, R), λ represents the agreed verification method. The verification node signs the verification result f with the private key sv representing its own identity, obtains fsv, and then broadcasts it to all other nodes.
Step 4: Any node obtains the verification result f of all other N-1 nodes regarding the clearing result R. Based on N fs, all nodes locally calculate the final verification result F. F can be expressed as: F = ψ (f1, f2...fn), ψ denotes the agreed final verification method, which is generally calculated by the method of majority results.
Step 5: Any node performs corresponding processing on the clearing result Rsi according to F: if F is passed, then {Rsi,t,m} is packed into block data, and the data is added to the local chain by adding a block. The chain structure finally forms a transaction clearing blockchain through repeated data addition; if F is not passed, replace the initiating node according to the strategy described in step 1, and re-execute step1-5 to clear the m trading instructions..

When the decentralized asset custody and clearing platform performs asset custody, the N nodes collectively manage the custody assets, and specifically include the following steps:
Step1: Fragment the asset control right P and distribute the asset control rights fragments in the N nodes. P can be formally described as: P = w (p1, p2 ... pn), w represents fragmentation processing method, in the multi-signature scheme, p represents a private key of n private keys; in a single signature scheme, p represents A 1/n private key fragment.
Step 2: In order to prevent the control rights of the assets are completely lost when a few nodes in N nodes fail, each node performs redundant storage of asset control rights fragments according to the control strategy. The redundant storage scheme needs to satisfy the majority of nodes could recover the control right of the assets, while a few nodes can not recover the control right.
Step 3: The asset control right fragment of each node is protected by the threshold logic to ensure that only after the withdrawal instruction passes the above-mentioned clearing process and is written in the blockchain, it can be accessed by the node.
Step4: When a majority of the N nodes agree on the withdrawal instruction, the blockchain gateway packages the multiple asset control rights fragments into an acceptable transfer instruction of the blockchain in which the custody asset is located, and broadcasts to the blockchain network.

The decentralized asset custody and clearing platform interacts with external systems through an access gateway. External systems, such as brokers or exchanges, issue accounts opening, transfer, withdrawals, and trading orders to the decentralized asset custody and clearing platform through the access gateway. When platform receives the account opening and withdrawal request, it adopts a multi-factor authentication method. After confirming the user request again, the corresponding operation is completed. If the user performs an asset withdraw operation, after the clearing and threshold logic of the decentralized asset custody platform is sequentially performed, the request is sent to the corresponding blockchain network to complete the final withdraw operation according to the type of the asset extraction requested by the user.

The multi-factor authentication is one or a combination of short message, mail, and GA authentication.

Beneficial effects of this invention include but are not limited to: 1) Constructs an asset custody and clearing platform that is not relying on any single institution or entity, by decentralized and multi-node organizational forms. User assets security is determined by majority nodes combined, instead of any single or a few nodes on the platform. This essentially solves the security issue of centralized exchanges; 2) The decentralized exchanges and virtual brokers constructed on such platform could provide users with similar performance and user experience to that of centralized exchanges, while maintaining independent operations and sharing market depth and liquidity; 3) The operations by virtual brokers, exchanges, decentralized asset custody and clearing platform are all trackable, queriable, immutable. This prevents the inventive for these parties to inflate fake assets from underlying mechanism and well tracks liabilities in case of disputes.

### BRIEF DESCRIPTION OF THE FIGURES

The invention is more fully appreciated in connection with the following detailed description taken in conjunction with the accompanying drawings, in which:
FIG. 1 is a schematic diagram of a method for constructing an efficient and secure decentralized asset custody and clearing platform system according to the present invention.
FIG. 2 is a flow diagram of the asset custody service according to the present invention.
FIG. 3 is a flow diagram of an external system account opening and asset withdraw according to the present invention.
FIG. 4 is a flow diagram of an external system transaction order according to the present invention.

### DETAILED DESCRIPTION OF EXEMPLARY EMBODIMENTS

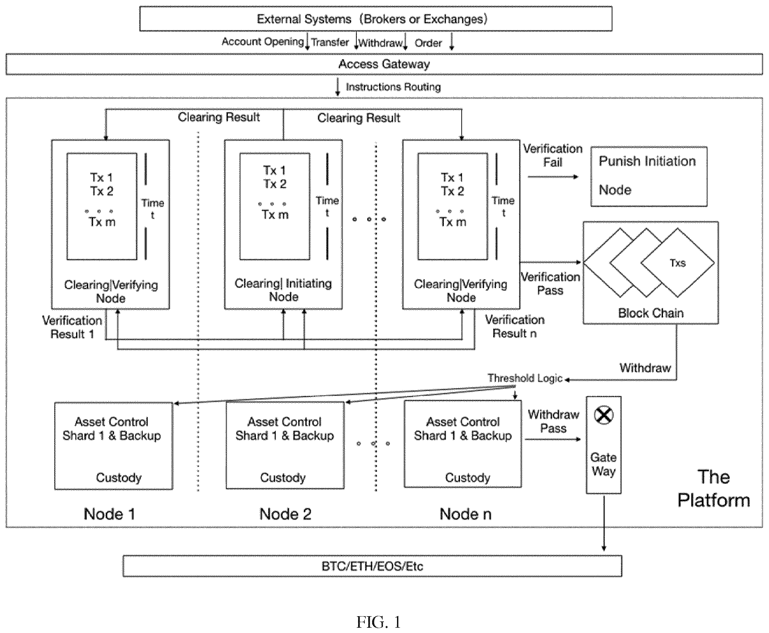

A schematic diagram of the overall architecture of an efficient and secure decentralized asset custody and clearing platform is shown in Figure 1. As illustrated, the system comprises a first access gateway communicably coupled to a platform. The platform comprises at least three dedicated, computationally independent computing nodes, denoted clearing/verifying and clearing/initiating nodes in Figure 1. The account opening, transfer, withdrawal and ordering instructions of the external system are routed to the decentralized asset custody and clearing platform system via the access gateway routing. As shown in FIG.1, node 2 is designated the transaction clearing initiation node, and the remaining nodes are transaction clearing verification nodes. When a transaction is initiated, Node 2 clears the transaction record 1-M in time t, and broadcasts the clearing result to other N-1 nodes for verification. After receiving the clearing result of the originating node (Node 2 in Figure 1), each verification node re-clears the transaction record 1-M, compares the clearing result with the received clearing result, obtains the verification result, and broadcasts the verification result to other N-1 nodes. If N/2 or more nodes (i.e. a majority) determine that the clearing result is correct, then the clearing result is verified, and the transaction 1-M will be packaged into blocks, and added to the unchangeable block record in an additional manner to become a part of the local blockchain. If N/2 or more nodes think that the clearing result is wrong, then the clearing result is not verified, and node 3 will replace node 2 as the initiating node, re-clear the transaction 1-M, and follow the preset penalty policy to penalize node 2. If the transaction is a withdrawal instruction, the above-described verification process is first performed in respect of the instruction. If the instruction is verified, a withdrawal request is sent to the threshold logic on the basis of the clearing result. The threshold logic distributes the request to each node, and each node votes for the withdrawal request through its own asset control right fragment. Once again, if more than N/2 nodes agree to the withdrawal, the withdrawal request is passed. If N/2 or more nodes disagree with the withdrawal, the withdrawal request is rejected.

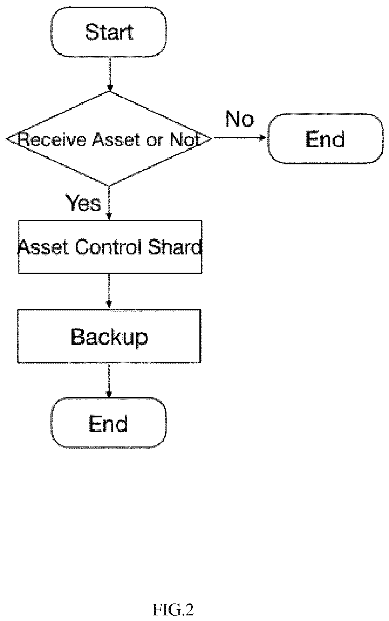

The process of asset custody service is shown in FIG.2. After the process starts, the decentralized asset custody and clearing platform first judges whether the custody asset is correctly received. If it is not received, then the process ends abnormally. After receiving the asset, the asset control right is first fragmented. Then, control right fragment is redundantly backed up according to the security policy.

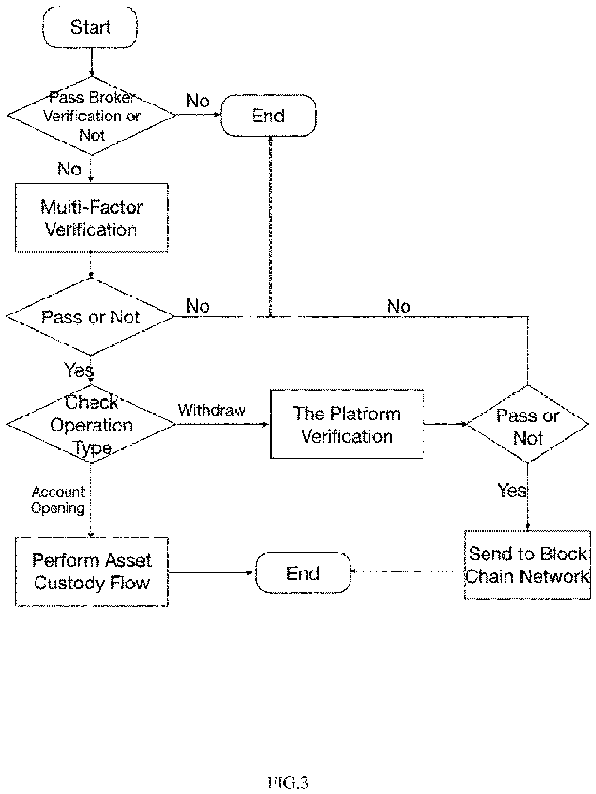

The platform is coupled, via a second access gateway (Figure 1), to an external blockchain network (e.g. BTC, ETH, EOS, etc.) which may support external brokers or exchanges. The external system's account opening and asset withdraw process is shown in Figure 3. After the process starts, the broker first verifies the identity of the user, and if the verification fails, the process ends abnormally. After the verification is passed, the decentralized asset custody and clearing platform according to an exemplary embodiment of the invention performs multi-factor verification as described above. If the verification fails, the process ends abnormally. After the verification is passed, different processes are executed according to the operation type: if it is an asset withdraw operation, the decentralized asset custody and clearing platform performs multi-node verification as described above. If the verification is passed, the asset withdraw request is sent to the corresponding (external) blockchain network to complete the asset withdraw operation. If the account opening operation is performed, the asset custody service flow is executed. After the process ends, the account opening operation ends normally.

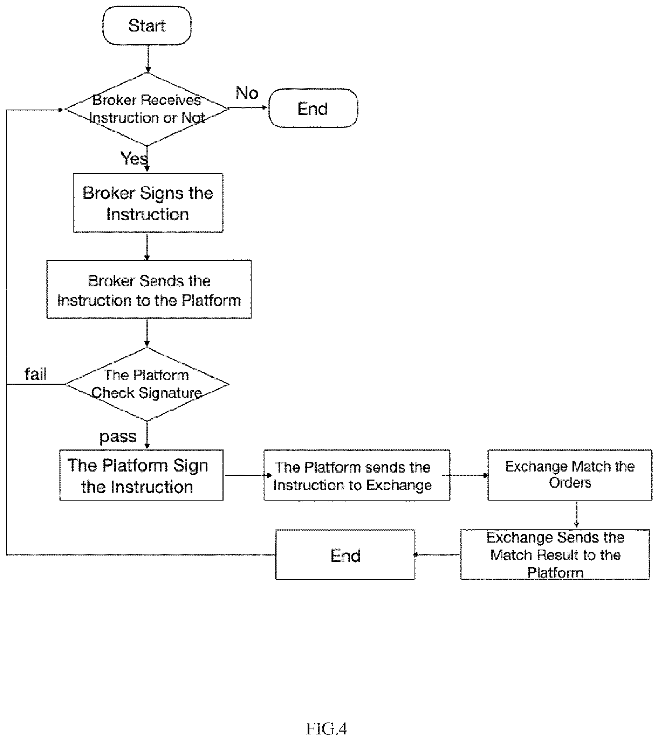

The transaction order flow of the external system is shown in Figure 4. The external system is based on brokers and exchanges. After the process starts, the broker first judges whether the transaction instruction is received, and if there is no instruction, the process ends; after receiving the transaction instruction, the broker first signs the transaction instruction with his private key, and then sends the signed instruction to the decentralized asset custody and clearing platform according to an exemplary embodiment of the invention. After receiving the transaction instruction, the platform first detects whether the instruction includes the broker's signature, and if it does not, the platform ignores the instruction; if it does, the platform uses its own private key to sign the transaction, and then sends the transaction to the exchange; after the exchange completes the transaction order, the exchange sends the result to the decentralized asset custody and clearing platform, which completes the clearing of the transaction accordingly. Then proceed to the next transaction instruction in the same process until no new instructions are received. It will be apparent that the use of the decentralized digital asset storage and transfer system, either alone (for use in some institutions), or in conjunction with an external broker/exchange can systematically improve the efficiency and speed at which instructions can be completed, without compromising the robustness against security attacks.

The foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications; they thereby enable others skilled in the art to best utilize the invention and various embodiments with various modifications as are suited to the particular use contemplated. Notably, not every benefit described here- in need be realized by each embodiment of the invention; rather any specific embodiment can provide one or more of the advantages discussed above. It is intended that the following claims define the scope of the invention.

## Claims

1. A computer-implemented decentralized digital asset storage and transfer system, comprising a first access gateway communicably coupled to a platform comprising at least three dedicated and computationally independent computing nodes, wherein said platform is configured to, upon receipt of a digital asset storage or transfer instruction via said first access gateway, perform a method comprising:
• defining a said node as an originating node and others of said nodes as verifying nodes;
• performing, by said originating node, a verification process in respect of said instruction to determine a verification result, and broadcasting said verification result to said verifying nodes;
• performing, by each verifying node independently, a verification process in respect of said instruction to determine a verification result, and comparing said verification result with the verification result received from the originating node;
• determining a consensus between verification results determined by said nodes;
• in the event of a consensus, each node processing said instruction, independently of said other nodes; and
• in the event of no consensus, penalizing said originating node according to a preset penalty policy and selecting an alternative one of said nodes as an originating node, and repeating the said method with the other nodes as verifying nodes.

2. A decentralized digital asset storage and transfer system according to claim 1, wherein said method further comprises packing result data from said processing by each node into respective block data, and adding said block data to a local blockchain network hosted by said platform.

3. A decentralized digital asset storage and transfer system according to claim1, wherein said originating node is defined according to a mining validation strategy.

4. A decentralized digital asset storage and transfer system according to any of claim 1, wherein said originating node is configured to perform said verification process in respect of said instruction to obtain a first clearing result, sign said first clearing result with its private key, and broadcast the signed first clearing result to said verifying nodes.

5. A decentralized digital asset storage and transfer system according to claim 4, wherein the verifying nodes are configured to, upon receipt of said signed first clearing result, perform said verification process in respect of said instruction to obtain a local clearing result, and compare said local clearing result with said first clearing result to determine a verification result.

6. A decentralized digital asset storage and transfer system according to claim 5, wherein each said verifying node is configured to sign the respective verification result with its own private key and broadcast the signed verification result to the other nodes.

7. A decentralized digital asset storage and transfer system according to claim 5 or claim 6, wherein each node is configured to, upon receipt of signed verification results from the other nodes, calculate, using said verification results, a final verification result.

8. A decentralized digital asset storage and transfer system according to any of claims 5 to 7, wherein each node is configured to perform a verification process in respect of said first clearing result in relation to a respective final verification result and, if said clearing result is verified, pack said first clearing result and verification data into block data and add said block data to a local blockchain network hosted by said platform.

9. A decentralized digital asset storage and transfer system according to any of the preceding claims, wherein a consensus is determined between the verification results of processing by said nodes when the verification results of a majority of said nodes correspond.

10. A decentralized digital asset storage and transfer system according to any of the preceding claims, wherein asset control rights are stored in a distributed manner among said nodes, each node storing a fragment of a respective asset control right.

11. A decentralized digital asset storage and transfer system according to any of the preceding claims, further comprising a second access gateway configured to be coupled to an external blockchain network.

12. A decentralized digital asset storage and transfer system according to 10, further comprising a second access gateway configured to be coupled to an external blockchain network, and wherein, when said instruction comprises a digital asset transfer, said second access gateway is configured to, in the event that a consensus is determined between the verification results of said nodes, package respective asset control right fragments into a transfer instruction compatible with a specified external blockchain network, and transmit said transfer instruction to said external blockchain network.

13. A computer-implemented method of performing decentralized digital asset storage and transfer, comprising providing a first access gateway communicably coupled to a platform comprising at least three dedicated and computationally independent computing nodes, the method comprising:
• receiving a digital asset storage or transfer instruction via said first access gateway;
• defining a said node as an originating node and others of said nodes as verifying nodes;
• performing, by said originating node, a verification process in respect of said instruction to determine a verification result, and broadcasting said verification result to said verifying nodes;
• performing, by each verifying node independently, a verification process in respect of said instruction to determine a verification result, and comparing said verification result with the verification result received from the originating node;
• determining a consensus between verification results determined by said nodes;
• in the event of a consensus, processing said instruction by each node independently of said other nodes; and
• in the event of no consensus, penalizing said originating node according to a preset penalty policy and selecting an alternative one of said nodes as an originating node, and repeating the said method with the other nodes as verifying nodes.

## Patentansprüche

1. Computerimplementiertes dezentrales Speicher- und Übertragungssystem für digitale Ressourcen, das ein erstes Zugangs-Gateway umfasst, das kommunikativ mit einer Plattform gekoppelt ist, die mindestens drei dedizierte und rechentechnisch unabhängige Rechenknoten umfasst, wobei die genannte Plattform beim Empfang einer Anweisung zur Speicherung oder Übertragung einer digitalen Ressource über das genannte erste Zugangs-Gateway dafür konfiguriert ist, ein Verfahren durchzuführen, das Folgendes umfasst:
• Definieren des genannten Knotens als Ursprungsknoten und anderer genannter Knoten als Verifizierungsknoten;
• Durchführen, durch den genannten Ursprungsknoten, eines Verifizierungsprozesses in Bezug auf die genannte Anweisung, um ein Verifizierungsergebnis zu bestimmen, und Senden des genannten Verifizierungsergebnisses an die genannten Verifizierungsknoten;
• Durchführen, unabhängig durch jeden Verifizierungsknoten, eines Verifizierungsprozesses in Bezug auf die genannte Anweisung, um ein Verifizierungsergebnis zu bestimmen, und Vergleichen des genannten Verifizierungsergebnisses mit dem Verifizierungsergebnis, das vom Ursprungsknoten empfangen wurde;
• Bestimmen eines Konsenses zwischen Verifizierungsergebnissen, die von den genannten Knoten bestimmt werden;
• im Falle eines Konsens verarbeitet jeder Knoten die genannte Anweisung, unabhängig von den genannten anderen Knoten; und
• falls kein Konsens vorliegt, Sanktionieren des genannten Ursprungsknotens gemäß einer voreingestellten Sanktionierungrichtlinie und Auswählen eines alternativen der genannten Knoten als Ursprungsknoten, und Wiederholen des genannten Verfahrens mit den anderen Knoten als Verifizierungsknoten.

2. Dezentrales Speicher- und Übertragungssystem für digitale Ressourcen nach Anspruch 1, wobei das genannte Verfahren ferner das Packen von Ergebnisdaten aus der genannten Verarbeitung durch jeden Knoten in jeweilige Blockdaten und das Hinzufügen der genannten Blockdaten zu einem lokalen Blockchain-Netzwerk umfasst, das von der genannten Plattform gehostet wird.

3. Dezentrales Speicher- und Übertragungssystem für digitale Ressourcen nach Anspruch 1, wobei der genannte Ursprungsknoten gemäß einer Mining-Validierungsstrategie definiert ist.

4. Dezentrales Speicher- und Übertragungssystem für digitale Ressourcen nach einem der Ansprüche 1, wobei der genannte Ursprungsknoten dafür konfiguriert ist, den genannten Verifizierungsprozess in Bezug auf die genannte Anweisung durchzuführen, um ein erstes Clearing-Ergebnis zu erhalten, das genannte erste Clearing-Ergebnis mit seinem privaten Schlüssel zu signieren, und das signierte erste Clearing-Ergebnis an die genannten Verifizierungsknoten zu senden.

5. Dezentrales Speicher- und Übertragungssystem für digitale Ressourcen nach Anspruch 4, wobei die Verifizierungsknoten dafür konfiguriert sind, bei Empfang des genannten signierten ersten Clearing-Ergebnisses den genannten Verifizierungsprozess in Bezug auf die genannte Anweisung durchzuführen, um ein lokales Clearing-Ergebnis zu erhalten, und das genannte lokale Clearing-Ergebnis mit dem genannten ersten Clearing-Ergebnis zu vergleichen, um ein Verifizierungsergebnis zu ermitteln.

6. Dezentrales Speicher- und Übertragungssystem für digitale Ressourcen nach Anspruch 5, wobei jeder der genannten Verifizierungsknoten dafür konfiguriert ist, das jeweilige Verifizierungsergebnis mit seinem eigenen privaten Schlüssel zu signieren und das signierte Verifizierungsergebnis an die anderen Knoten zu senden.

7. Dezentrales Speicher- und Übertragungssystem für digitale Ressourcen nach Anspruch 5 oder Anspruch 6, wobei jeder Knoten dafür konfiguriert ist, bei Empfang von signierten Verifizierungsergebnissen von den anderen Knoten unter Verwendung der genannten Verifizierungsergebnisse ein endgültiges Verifizierungsergebnis zu berechnen.

8. Dezentrales Speicher- und Übertragungssystem für digitale Ressourcen nach einem der Ansprüche 5 bis 7, wobei jeder Knoten dafür konfiguriert ist, einen Verifizierungsprozess in Bezug auf das genannte erste Clearing-Ergebnis in Bezug auf ein jeweiliges endgültiges Verifizierungsergebnis durchzuführen und, wenn das genannte Clearing-Ergebnis verifiziert ist, Packen des genannten ersten Clearing-Ergebnisses und der Verifizierungsdaten in Blockdaten und Hinzufügen der genannten Blockdaten zu einem lokalen Blockchain-Netzwerk, das von der genannten Plattform gehostet wird.

9. Dezentrales Speicher- und Übertragungssystem für digitale Ressourcen nach einem der vorhergehenden Ansprüche, wobei ein Konsens zwischen den Verifizierungsergebnissen der Verarbeitung durch die genannten Knoten bestimmt wird, wenn die Verifizierungsergebnisse einer Mehrheit der genannten Knoten übereinstimmen.

10. Dezentrales Speicher- und Übertragungssystem für digitale Ressourcen nach einem der vorhergehenden Ansprüche, wobei Ressourcen-Kontrollrechte auf verteilte Weise unter den genannten Knoten gespeichert werden, wobei jeder Knoten ein Fragment eines jeweiligen Ressourcen-Kontrollrechts speichert.

11. Dezentrales Speicher- und Übertragungssystem für digitale Ressourcen nach einem der vorhergehenden Ansprüche, das ferner ein zweites Zugangs-Gateway umfasst, das dafür konfiguriert ist, an ein externes Blockchain-Netzwerk gekoppelt zu werden.

12. Dezentrales Speicher- und Übertragungssystem für digitale Ressourcen nach Anspruch 10, das ferner ein zweites Zugangs-Gateway umfasst, das dafür konfiguriert ist, an ein externes Blockchain-Netzwerk gekoppelt zu werden, und wobei, wenn die genannte Anweisung eine Übertragung digitaler Ressourcen umfasst, das genannte zweite Zugangs-Gateway dafür konfiguriert ist, entsprechende Ressourcen-Kontrollrechtsfragmente in einen Übertragungsbefehl zu packen, der mit einem spezifizierten externen Blockchain-Netzwerk kompatibel ist, und den genannten Übertragungsbefehl an das genannte externe Blockchain-Netzwerk übermitteln, für den Fall, dass ein Konsens zwischen den Verifizierungsergebnissen der genannten Knoten festgestellt wird.

13. Computerimplementiertes Verfahren zur Durchführung einer dezentralen Speicherung und Übertragung digitaler Ressourcen, das das Bereitstellen eines ersten Zugangs-Gateways umfasst, das kommunikativ mit einer Plattform gekoppelt ist, die mindestens drei dedizierte und rechentechnisch unabhängige Rechenknoten umfasst, wobei das Verfahren Folgendes umfasst:
• Empfangen einer Anweisung zur Speicherung oder Übertragung einer digitalen Ressource über das genannte erste Zugangs-Gateway;
• Definieren des genannten Knotens als Ursprungsknoten und anderer genannter Knoten als Verifizierungsknoten;
• Durchführen, durch den genannten Ursprungsknoten, eines Verifizierungsprozesses in Bezug auf die genannte Anweisung, um ein Verifizierungsergebnis zu bestimmen, und Senden des genannten Verifizierungsergebnisses an die genannten Verifizierungsknoten;
• Durchführen, unabhängig durch jeden Verifizierungsknoten, eines Verifizierungsprozesses in Bezug auf die genannte Anweisung, um ein Verifizierungsergebnis zu bestimmen, und Vergleichen des genannten Verifizierungsergebnisses mit dem Verifizierungsergebnis, das vom Ursprungsknoten empfangen wurde;
• Bestimmen eines Konsenses zwischen Verifizierungsergebnissen, die von den genannten Knoten bestimmt werden;
• im Falle eines Konsens, Verarbeiten der genannten Anweisung durch jeden Knoten unabhängig von den genannten anderen Knoten; und
• falls kein Konsens vorliegt, Sanktionieren des genannten Ursprungsknotens gemäß einer voreingestellten Sanktionierungrichtlinie und Auswählen eines alternativen der genannten Knoten als Ursprungsknoten und Wiederholen des genannten Verfahrens mit den anderen Knoten als Verifizierungsknoten.

## Revendications

1. Système de stockage et de transfert décentralisés d'actifs numériques mis en œuvre par ordinateur, comprenant une première passerelle d'accès couplée en communication à une plateforme comprenant au moins trois nœuds informatiques dédiés et indépendants informatiquement, ladite plateforme étant configurée pour, à la réception d'une instruction de stockage et de transfert d'actifs numériques par l'intermédiaire de ladite première passerelle d'accès, réaliser un procédé consistant à :
• définir un tel nœud en guise de nœud d'origine et d'autres tels nœuds en guise de nœuds de vérification ;
• réaliser, par ledit nœud d'origine, un processus de vérification par rapport à ladite instruction pour déterminer un résultat de vérification, et diffuser ledit résultat de vérification vers lesdits nœuds de vérification ;
• réaliser, indépendamment par chaque nœud de vérification, un processus de vérification par rapport à ladite instruction pour déterminer un résultat de vérification, et comparer ledit résultat de vérification au résultat de vérification reçu en provenance du nœud d'origine ;
• déterminer un consensus entre les résultats de vérification déterminés par lesdits noeuds ;
• s'il y a un consensus, traiter, par chaque nœud, ladite instruction indépendamment desdits autres noeuds ; et
• s'il n'y a pas de consensus, pénaliser ledit nœud d'origine selon une stratégie de pénalité prédéfinie et sélectionner, parmi lesdits nœuds, un nœud alternatif en guise de nœud d'origine et répéter ledit procédé avec les autres nœuds en guise de nœuds de vérification.

2. Système de stockage et de transfert décentralisés d'actifs numériques selon la revendication 1, dans lequel ledit procédé consiste en outre à empaqueter, par chaque nœud, des données de résultat provenant dudit traitement en des données en bloc respectives et à ajouter lesdites données en bloc à un réseau local de chaînes de blocs hébergé par ladite plateforme.

3. Système de stockage et de transfert décentralisés d'actifs numériques selon la revendication 1, dans lequel ledit nœud d'origine est défini selon une stratégie de validation de minage.

4. Système de stockage et de transfert décentralisés d'actifs numériques selon la revendication 1, dans lequel ledit nœud d'origine est configuré pour réaliser ledit processus de vérification par rapport à ladite instruction pour obtenir un premier résultat de compensation, signer ledit premier résultat de compensation avec sa clé privée et diffuser le premier résultat de compensation signé vers lesdits nœuds de vérification.

5. Système de stockage et de transfert décentralisés d'actifs numériques selon la revendication 4, dans lequel les nœuds de vérification sont configurés pour, à la réception dudit premier résultat de compensation signé, réaliser ledit processus de vérification par rapport à ladite instruction pour obtenir un résultat de compensation local, et comparer ledit résultat de compensation local audit premier résultat de compensation pour déterminer un résultat de vérification.

6. Système de stockage et de transfert décentralisés d'actifs numériques selon la revendication 5, dans lequel chacun desdits nœuds de vérification est configuré pour signer le résultat de vérification respectif avec sa propre clé privée et diffuser le résultat de vérification signé vers les autres nœuds.

7. Système de stockage et de transfert décentralisés d'actifs numériques selon la revendication 5 ou 6, dans lequel chaque nœud est configuré pour, à la réception de résultats de vérification signés en provenance des autres nœuds, calculer, au moyen desdits résultats de vérification, un résultat de vérification final.

8. Système de stockage et de transfert décentralisés d'actifs numériques selon l'une quelconque des revendications 5 à 7, dans lequel chaque nœud est configuré pour réaliser un processus de vérification par rapport audit premier résultat de compensation en relation avec un résultat de vérification final respectif et, si ledit résultat de compensation est vérifié, empaqueter ledit premier résultat de compensation et lesdites données de vérification en des données en bloc et ajouter lesdites données en bloc à un réseau local de chaînes de blocs hébergé par ladite plateforme.

9. Système de stockage et de transfert décentralisés d'actifs numériques selon l'une quelconque des revendications précédentes, dans lequel un consensus est déterminé entre les résultats de vérification d'un traitement par lesdits nœuds quand les résultats de vérification d'une majorité desdits nœuds correspondent.

10. Système de stockage et de transfert décentralisés d'actifs numériques selon l'une quelconque des revendications précédentes, dans lequel des droits de contrôle d'actif sont stockés de manière distribuée parmi lesdits nœuds, chaque nœud stockant un fragment d'un droit de contrôle d'actif respectif.

11. Système de stockage et de transfert décentralisés d'actifs numériques selon l'une quelconque des revendications précédentes, comprenant en outre une seconde passerelle d'accès configurée pour être couplée à un réseau externe de chaînes de blocs.

12. Système de stockage et de transfert décentralisés d'actifs numériques selon la revendication 10, comprenant en outre une seconde passerelle d'accès configurée pour être couplée à un réseau externe de chaînes de blocs et dans lequel, quand ladite instruction comprend un transfert d'actif numérique, ladite seconde passerelle d'accès est configurée pour, si un consensus est déterminé entre les résultats de vérification desdits nœuds, empaqueter des fragments de droit de contrôle d'actif respectifs en une instruction de transfert compatible avec un réseau externe de chaînes de blocs spécifié et transmettre ladite instruction de transfert audit réseau externe de chaînes de blocs.

13. Procédé mis en œuvre par ordinateur de réalisation d'un stockage et d'un transfert décentralisés d'actifs numériques, consistant à fournir une première passerelle d'accès couplée en communication à une plateforme comprenant au moins trois nœuds informatiques dédiés et indépendants informatiquement, ledit procédé consistant à :
• recevoir une instruction de stockage et de transfert d'actifs numériques par l'intermédiaire de ladite première passerelle d'accès ;
• définir un tel nœud en guise de nœud d'origine et d'autres tels nœuds en guise de nœuds de vérification ;
• réaliser, par ledit nœud d'origine, un processus de vérification par rapport à ladite instruction pour déterminer un résultat de vérification, et diffuser ledit résultat de vérification vers lesdits nœuds de vérification ;
• réaliser, indépendamment par chaque nœud de vérification, un processus de vérification par rapport à ladite instruction pour déterminer un résultat de vérification, et comparer ledit résultat de vérification au résultat de vérification reçu en provenance du nœud d'origine ;
• déterminer un consensus entre les résultats de vérification déterminés par lesdits noeuds ;
• s'il y a un consensus, traiter, par chaque nœud, ladite instruction indépendamment desdits autres oeuds ; et
• s'il n'y a pas de consensus, pénaliser ledit nœud d'origine selon une stratégie de pénalité prédéfinie et sélectionner, parmi lesdits nœuds, un nœud alternatif en guise de nœud d'origine et répéter ledit procédé avec les autres nœuds en guise de nœuds de vérification.
